# EUROPÄISCHE PATENTSCHRIFT

(11) **EP 3 199 714 B1**
(45) Veröffentlichungstag und Bekanntmachung des Hinweises auf die Patenterteilung: **12.02.2020**
(21) Anmeldenummer: 17000262.0
(22) Anmeldetag: 29.12.2015
(51) Int. Cl.: E03C 1/084

(54) **SANITÄRES AUSLAUFELEMENT**
SANITARY OUTLET UNIT
ÉLEMENT DE SORTIE SANITAIRE

(30) Priorität: 03.02.2015 DE 202015000856 U
(43) Veröffentlichungstag der Anmeldung: 02.08.2017
(62) Teilanmeldung aus: 15003686.1
(73) Patentinhaber: Neoperl GmbH, 79379 Müllheim (DE)
(72) Erfinder: STEIN, Alexander, 79241 Ihringen (DE)
(74) Vertreter: Börjes-Pestalozza, Henrich

(56) Entgegenhaltungen:
- EP-A1- 1 933 217
- DE-U1- 20 104 948
- DE-U1-202010 016 867

## Beschreibung

Die Erfindung betrifft ein sanitäres Auslaufelement, das mit seinem Einsetzgehäuse in den Wasserauslauf einer sanitären Auslaufarmatur einsetzbar ist und einen Strahlregler zum Formen des austretenden Wasserstrahls hat, dem zuströmseitig ein Durchflussmengenregler vorgeschaltet ist, welcher die pro Zeiteinheit durchströmende Wassermenge auf einen festgelegten Wert einregelt oder begrenzt und der ein ringförmiges Drosselelement aus elastischem Material hat, das in einem Reglergehäuse des Durchflussmengenreglers in einer Ringnut angeordnet ist und einen Gehäusekern des Durchflussmengenreglers umgreift, wobei zumindest eine der die Ringnut begrenzenden Umfangswandungen eine Regelprofilierung trägt, wobei das Reglergehäuse im Bereich des Nutgrunds der Ringnut wenigstens eine Durchflussöffnung aufweist, wobei der Drosselkörper zwischen sich und der zumindest einen, die Regelprofilierung tragenden Umfangswandung einen Steuer- oder Ringspalt begrenzt, wobei der Drosselkörper sich bei steigendem Druck des durchströmenden Wassers derart in die Regelprofilierung einformt, dass sich der Ringspalt zunehmend verengt, und wobei der Durchflussmengenregler mit dem Reglergehäuse im Einsetzgehäuse verschieblich geführt ist.

Sanitäre Auslaufelemente, die in einer Wasserleitung angeordnet sind, sind bereits in den verschiedensten Ausführungen bekannt. So hat man bereits Strahlregler geschaffen, die in den Wasserauslauf einer sanitären Auslaufarmatur einsetzbar sind. Die vorbekannten Strahlregler, die entweder unmittelbar im Wasserauslauf einer sanitären Auslaufarmatur befestigt oder in ein am Wasserauslauf montierbares Auslaufmundstück eingesetzt werden können, weisen regelmäßig einen Strahlzerleger auf, welcher den durch die Rohrleitung und den Armaturenkörper zufließenden Wasserstrom in eine Vielzahl von Einzelstrahlen unterteilt. Diese Einzelstrahlen können je nach Strahlregler-Ausführung bei Bedarf belüftet werden, bevor in einer dem Strahlzerleger nachfolgenden Homogenisiereinrichtung und/ oder einem abströmseitigen Strömungsgleichrichter, die eine netz-, gitter-, sieb- oder wabenartige Struktur haben, ein homogener, weicher und nichtspritzender Wasserstrahl am Wasserauslauf geformt wird.

Damit der Strahlregler seine Funktion optimal erfüllen und den aus dem Wasserauslauf austretenden Wasserstrahl formen kann, ist eine gewisse, durch den Strahlregler durchströmende Wassermenge erforderlich. Da der Strahlzerleger und gegebenenfalls auch die nachfolgenden Funktionseinheiten des Strahlreglers ein Strömungshindernis bilden, besteht bei niedrigen Drücken die Gefahr, dass durch den Strahlregler keine ausreichende Wassermenge durchfließen und der Strahlregler seine Funktion nicht erfüllen kann, und dass der aus dem Strahlregler austretende Wasserstrahl als unkomfortabel empfunden wird.

Aus der DE 20 2010 016 867 U1 kennt man bereits ein sanitäres Auslaufelement der eingangs erwähnten Art, dass mit seinem Einsetzgehäuse in den Wasserauslauf einer sanitären Auslaufarmatur einsetzbar ist. Das vorbekannte Auslaufelement weist ein zuströmseitiges Vorsatzsieb und einen abströmseitigen Strahlregler zum Formen des austretenden Wasserstrahls auf, zwischen denen ein Durchflussmengenregler angeordnet ist, welcher die pro Zeiteinheit durchströmende Wassermenge auf einen festgelegten Wert einregelt oder begrenzt. Der Durchflussmengenregler des vorbekannten Auslaufelements weist einen ringförmigen Drosselkörper aus elastischem Material auf, der in einem Reglergehäuse in einer Ringnut angeordnet ist und einen Gehäusekern umgreift. Zumindest eine der die Ringnut begrenzenden Umfangswandungen trägt eine Regelprofilierung, in die sich der elastische Drosselkörper bei steigendem Druck des durchströmenden Wassers derart einformt, dass sich der Ringspalt zunehmend verengt. Um den Durchflussquerschnitt des in dem vorbekannten Auslaufelement vorgesehenen Durchflussmengenreglers bei Bedarf verändern zu können, ist in dessen Reglergehäuse ein axial verstellbares Stellelement mit einem Ringflansch vorgesehen, auf welchem Ringflansch der elastische Drosselkörper aufliegt. Dieser elastische Drosselkörper wirkt mit der Regelprofilierung zusammen, die an der als Gegenelement vorgesehenen Umfangswandung angeordnet ist. Durch eine manuelle Verstellung des den Drosselkörper tragenden Stellelements in seiner Relativposition zum Gegenelement kann die Durchflussleistung des im vorbekannten Auslaufelement vorgesehenen Durchflussmengenreglers verändert werden. Eine Veränderung der Durchflussleistung ändert jedoch nichts daran, dass der Durchflussmengenregler bei vorgewählter Durchflussleistung insbesondere bei niedrigen Drücken des durch das Auslaufelement durchströmenden Wassers, keine ausreichende Wassermenge zum Strahlregler durchfließen lässt.

In der US 4 562 960 A ist ein sanitäres Auslaufelement vorbeschrieben, das einen Strahlbelüfter hat, dem ein Durchflussmengenregler in Strömungsrichtung vorgeschaltet ist. Während der Durchflussmengenregler das durchströmende Wasser druckunabhängig auf eine fest ausgelegte maximale Durchflussleistung einzuregeln hat, soll der in Strömungsrichtung nachfolgende Strahlbelüfter einen homogenen, perlend-weichen und nicht-spritzenden Wasserstrahl formen. Der Durchflussmengenregler des aus US 4 562 960 A vorbekannten Auslaufelements weist einen ringförmigen Drosselkörper aus elastischem Material auf, der zwischen sich und einem innenliegenden Regelkörper einen Steuerspalt begrenzt, der mit steigendem Druck des durchströmenden Wassers sich zunehmend verengt, derart, dass auch bei ansteigendem Druck des durchströmenden Wassers eine festgelegte maximale Durchflussleistung nicht überschritten wird. Das vom Durchflussmengenregler des vorbekannten Auslaufelements kommende Wasser strömt anschließend durch den in Strömungsrichtung nachfolgenden Strahlbelüfter. Dieser Strahlbelüfter weist einen Strahlzerleger auf, der den zufließenden Wasserstrom in eine Vielzahl von Einzelstrahlen aufteilt. Dabei stellt der die vereinzelten Wasserstrahlen erzeugende Strahlzerleger eine Verengung des Durchflussquerschnitts dar, in welcher Querschnittsverengung die erzeugten Einzelstrahlen eine derartige Beschleunigung erfahren, dass auf der Abströmseite des Strahlzerlegers ein Unterdruck entsteht, mit dessen Hilfe Umgebungsluft in das Strahlreglergehäuse eingesaugt wird, die anschließend mit den Einzelstrahlen vermischt wird, bevor die derart belüfteten Einzelstrahlen in einem abströmseitigen Strömungsgleichrichter zu einem homogenen Gesamtstrahl wieder zusammengeführt werden.

Der im vorbekannten Auslaufelement vorgesehene Durchflussmengenregler mischt nicht zu einer Grundleistung des Auslaufelements bei niedrigen Wasserdrücken noch eine bestimmte zusätzliche Wassermenge hinzu, um diese zusätzliche Wassermenge bei hohen Durchflussleistungen vollständig zu unterbinden, - vielmehr regelt der vorbekannte Durchflussmengenregler die Durchflussleistung lediglich auf einen festgelegten Maximalwert ein.

Es besteht daher insbesondere die Aufgabe, ein sanitäres Auslaufelement der eingangs erwähnten Art zu schaffen, das sowohl in niedrigen als auch in hohen Druckbereichen stets einen optimalen Durchflussquerschnitt bereitstellt.

Die erfindungsgemäße Lösung dieser Aufgabe besteht bei dem sanitären Auslaufelement der eingangs erwähnten Art insbesondere darin, dass der Durchflussmengenregler von einer Offenstellung, in der das Reglergehäuse zumindest von einer Teilmenge des Wasser umspült wird, gegen die Rückstellkraft zumindest eines Rückstellelements in eine Schließstellung bewegbar ist, in der das zum Strahlregler strömende Wasser den Durchflussmengenregler durchströmt, und dass der Durchflussmengenregler mit seinem Reglergehäuse in der Schließstellung derart auf einem als Ringscheibe ausgebildeten Auflager aufliegt, dass eine Auflageröffnung des Auflagers verschlossen wird und das durch das Einsetzgehäuse des Auslaufelements zum Strahlregler strömende Wasser nur noch den Durchflussmengenregler durchströmt.

Das erfindungsgemäße Auslaufelement weist ein Einsetzgehäuse auf, das in den Wasserauslauf einer sanitären Wasserauslaufarmatur einsetzbar ist. Das Auslaufelement hat einen Strahlregler, der das aus dem Auslaufelement austretende Wasser zu einem homogenen und möglichst nicht-spritzenden Wasserstrahl zu formen hat. Diesem Strahlregler ist ein Durchflussmengenregler vorgeschaltet, welcher die pro Zeiteinheit durchströmende Wassermenge auf einen festgelegten Wert einregelt.

Der Durchflussmengenregler hat ein ringförmiges Drosselelement aus elastischem Material, das in einer Ringnut im Reglergehäuse angeordnet ist und einen Gehäusekern umgreift, wobei zumindest einer der die Ringnut begrenzenden Umfangswandungen eine Regelprofilierung trägt, und wobei das Reglergehäuse im Bereich des Nutgrunds wenigstens eine Durchflussöffnung aufweist. Solche Durchflussmengenregler sind einfach in Konstruktion und Herstellung und haben sich bewährt.

Dabei ist vorgesehen, dass der Durchflussmengenregler zwischen sich und der zumindest einen, die Regelprofilierung tragenden Umfangswandung einen Ringspalt begrenzt, und dass der Drosselkörper sich bei steigendem Druck des durchströmenden Wassers derart in die Regelprofilierung einformt, dass sich der Ringspalt zunehmend verengt. Das durch das Auslaufelement durchströmende Wasser muss den Ringspalt passieren, der zwischen dem Drosselkörper und der Regelprofilierung vorgesehen ist. Mit zunehmendem Wasserdruck formt sich der elastische Drosselkörper zunehmend auch in die Regelprofilierung ein, so dass sich der Ringspalt derart verengt, dass unabhängig vom Wasserdruck ein festgelegter Maximalwert der Durchflussleistung nicht überschritten wird.

Erfindungsgemäß ist vorgesehen, dass der Durchflussmengenregler mit dem Reglergehäuse im Einsetzgehäuse verschieblich geführt und von einer Offenstellung, in der das Drossel- oder Reglergehäuse an seiner Gehäuseaußenseite entlang zumindest von einer Teilmenge des das Auslaufelement durchströmenden Wassers umspült wird, gegen die Rückstellkraft zumindest eines Rückstellelements in eine Schließstellung bewegbar ist. In dieser Schließstellung, in welcher der Durchflussmengenregler mit seinem Reglergehäuse derart auf einem als Ringscheibe ausgebildeten Auflager aufliegt, dass eine Auflageröffnung des Auflagers verschlossen wird, kann das durch das Drossel- oder Reglergehäuse des Auslaufelements zum Strahlregler strömende Wasser nur noch den Durchflussmengenregler oder die Durchflussdrossel durchströmen. Während also in der Offenstellung der Wasserdruck noch nicht eine Höhe erreicht hat, bei welcher einerseits die Rückstellkraft des wenigstens einen Rückstellelements überwunden wird, und andererseits der Durchflussmengenregler oder die Durchflussdrossel die Durchflussleistung auf den festgelegten Wert runterzuregeln oder zu begrenzen hat, wird bei einem demgegenüber erhöhten Wasserdruck der Durchflussmengenregler oder die Durchflussdrossel in die Schließstellung bewegt, in der das Wasser nur noch durch den Durchflussmengenregler oder die Durchflussdrossel derart passieren kann, dass der Durchflussmengenregler oder die Durchflussdrossel die auslaufende Wassermenge funktionsgerecht auf den festgelegten Maximalwert einregeln kann. Da durch Auswahl eines geeigneten Rückstellelements mit festliegender Rückstellkraft sich auch der Wasserdruck festlegen lässt, zu dem der Durchflussmengenregler oder die Durchflussdrossel in der Schließstellung funktionsgerecht arbeiten soll, ist das erfindungsgemäße Auslaufelement besonders gut und einfach abzustimmen und zeichnet sich durch einen funktionssicheren und stabilen Betrieb aus.

Damit das das Auslaufelement durchströmende Wasser in der Schließstellung allein durch den Durchflussmengenregler oder die Durchflussdrossel durchströmen muss und dort eingeregelt oder begrenzt werden kann, ohne dass nennenswerte Fehlströme am Durchflussmengenregler oder an der Durchflussdrossel vorbei zu befürchten ist, ist vorgesehen, dass der Durchflussmengenregler oder die Durchflussdrossel mit dem Drossel- oder Reglergehäuse in der Schließstellung derart auf dem als Ringscheibe ausgebildeten Auflager aufliegt, dass die Auflageröffnung verschlossen wird.

Um einen funktionsgerechten Betrieb des Durchflussmengenreglers in der Schließstellung zu gewährleisten, ist es vorteilhaft, wenn die zumindest eine Durchflussöffnung des Durchflussmengenreglers in der Schließstellung in der Auflageröffnung mündet.

Um Fehlströme in der Schließstellung am Durchflussmengenregler oder an der Durchflussdrossel vorbei noch zusätzlich ausschließen zu können und um das Drossel- oder Reglergehäuse in Schließstellung dicht auf das Auflager aufzulegen, ist es zweckmäßig, wenn zwischen dem Drossel- oder Reglergehäuse und dem Auflager zumindest eine Ringdichtung vorgesehen ist.

Dabei sieht eine bevorzugte Ausführungsform gemäß der Erfindung vor, dass zumindest eine Ringdichtung an das Reglergehäuse oder an dem die Auflageröffnung umgrenzenden Randbereich des Auflagers einstückig angeformt ist.

Der Strahlregler kann das durch das Auslaufelement durchströmende Wasser besonders gut formen, wenn der Strahlregler in üblicherweise einen Strahlzerleger hat, der das durchströmende Wasser in eine Vielzahl von Einzelstrahlen aufteilt.

Dabei wird eine Ausführungsform gemäß der Erfindung bevorzugt, bei welcher der Strahlzerleger als etwa topfförmiger Diffusor ausgebildet ist, der in der Umfangswandung seiner Topfform Zerlegeröffnungen hat zum Zerlegen des durchströmenden Wassers in eine Vielzahl von Einzelstrahlen.

Um den Durchflussmengenregler oder die Durchflussdrossel sicher zwischen der Schließstellung und der Offenstellung zu verschieben, ist es zweckmäßig, wenn an dem Topfboden des topfförmigen Diffusors ein Führungszapfen vorsteht, der eine Führungsöffnung im Drossel- oder Reglergehäuse durchsetzt.

Diese Führungsöffnung ist vorzugsweise etwa koaxial zur Längsachse des Drossel- oder Reglergehäuses angeordnet. Eine bevorzugte Ausführungsform gemäß der Erfindung sieht bei einem Durchflussmengenregler daher vor, dass die Führungsöffnung den Gehäusekern des Reglergehäuses durchsetzt.

Damit das das Auslaufelement durchströmende Wasser in der Schließstellung allein den Durchflussmengenregler oder die Durchflussdrossel durchströmt und von diesem/dieser auf einen festgelegten Wert eingeregelt oder begrenzt werden kann, ist es vorteilhaft, wenn der Diffusor an seinem zuströmseitigen Innenumfang eine Auflageraufnahme hat, auf der das Auflager aufliegt und wenn die Auflageraufnahme vorzugsweise als Ringabsatz ausgebildet ist.

Dabei sieht eine bevorzugte Ausführungsform gemäß der Erfindung vor, dass das Auflager als Ringscheibe ausgebildet ist.

Eine Weiterbildung gemäß der Erfindung sieht vor, dass der Führungszapfen an seinem freien Zapfenende Federarme trägt, dass an den Federarmen außenseitig Schiebeanschläge für das Drossel- oder Reglergehäuse vorgesehen sind, und dass die Federarme aus einer Funktionsstellung gegen ihre Eigenelastizität in eine Lösestellung zueinander einlenkbar oder einfederbar sind. Bei dieser Ausführungsform weist der Führungszapfen an seinem freien Zapfenende Federarme auf. An den Federarmen sind außenseitig Schiebeanschläge für das Drossel- oder Reglergehäuse vorgesehen, die den Schiebeweg des Drossel- oder Reglergehäuses in die dem Diffusor abgewandte Richtung begrenzen. Damit das Drossel- oder Reglergehäuse über die Schiebeanschläge auf die Federarme und die Führungszapfen aufgeschoben werden kann, sind die Federarme aus einer Funktionsstellung gegen ihre Eigenelastizität in eine Lösestellung zueinander einlenk- oder einfederbar.

Dabei ist es besonders vorteilhaft, wenn das Auslaufelement ein Vorsatz- oder Filtersieb hat, wenn das Vorsatz- oder Filtersieb am Einsetzgehäuse vorzugsweise lösbar befestigt ist, und wenn der Durchflussmengenregler oder die Durchflussdrossel im Einsetzgehäuse zwischen dem Strahlzerleger und dem Vorsatz- oder Filtersieb angeordnet und verschieblich geführt ist.

Auch bei einer vergleichsweise hohen, auf den Durchflussmengenregler oder die Durchflussdrossel einwirkenden Rückstellkraft des Rückstellelements besteht nicht die Gefahr, dass das Rückstellelement den Durchflussmengenregler oder die Durchflussdrossel über den Führungszapfen hinaus in Richtung zum Vorsatz- oder Filtersieb unkontrolliert verschiebt, wenn am Vorsatz- oder Filtersieb ein Sicherungszapfen vorgesehen ist, der bei am Drossel- oder Reglergehäuse verrastetem Vorsatz- oder Filtersieb derart in einen zwischen den Federarmen verbleibenden Freiraum vorsteht, dass die Federarme in ihrer Funktionsstellung gesichert sind. Wird bei dieser Ausführungsform das Vorsatz- oder Filtersieb am Drossel- oder Reglergehäuse verrastet, steht am Vorsatz- oder Filtersieb ein Sicherungszapfen derart in einen zwischen den Federarmen verbleibenden Freiraum vor, dass ein Einlenken oder Einfedern der Federarme in Richtung zueinander verhindert wird.

Eine besonders einfache und bevorzugte Ausführungsform gemäß der Erfindung sieht vor, dass das zumindest eine Rückstellelement eine Rückstell- oder Druckfeder ist.

Eine bevorzugte Weiterbildung gemäß der Erfindung sieht vor, dass zwischen dem Topfboden des Diffusors und dem Drossel- oder Reglergehäuse ein Dämpfungsring vorgesehen ist, dessen Ringöffnung den Führungszapfen durchsetzt und dass der Dämpfungsring den Schiebeweg des Drossel- oder Reglergehäuses in Richtung zum Strahlzerleger begrenzt. Dieser Dämpfungsring umgreift den Führungszapfen in seinem, dem Diffusor zugewandten Zapfen-Teilbereich. Dieser Dämpfungsring kann dem am Führungszapfen verschieblich geführten Durchflussmengenregler oder der dort verschieblich geführten Durchflussdrossel als Anschlagdämpfer dienen, - gleichzeitig kann der Dämpfungsring aber auch einen zwischen dem Führungszapfen und der Führungsöffnung am Gehäusekern des Drossel- oder Reglergehäuses verbleibenden Ringspalt verschließen, wenn sich der Durchflussmengenregler oder die Durchflussdrossel in der Schließstellung befindet. Da dieser Ringspalt in der Schließstellung verschlossen ist, werden auch in diesem Bereich unerwünschte Fehlströme vermieden.

Weitere Merkmale gemäß der Erfindung ergeben sich aus den Ansprüchen in Verbindung mit den Zeichnungen sowie der Beschreibung. Nachstehend wir die Erfindung anhand eines bevorzugten Ausführungsbeispieles noch näher beschrieben.

Es zeigt:
- Fig. 1: ein in einem Längsschnitt gezeigtes sanitäres Auslaufelement, das ein zuströmseitiges Vorsatz- oder Filtersieb sowie einen abströmseitigen Strahlregler hat, wobei zwischen dem Vorsatz- oder Filtersieb und dem Strahlregler ein Durchflussmengenregler im Einsetzgehäuse des Auslaufelements verschieblich geführt ist und wobei sich der Durchflussmengenregler in Figur 1 in einer Offenstellung befindet,
- Fig. 2: das ebenfalls längsgeschnittene Auslaufelement aus Figur 1, wobei sich der Durchflussmengenregler hier in einer Schließstellung befindet, und
- Fig. 3: das sanitäre Auslaufelement aus den Figuren 1 und 2 in einer auseinandergezogenen Einzelteildarstellung.

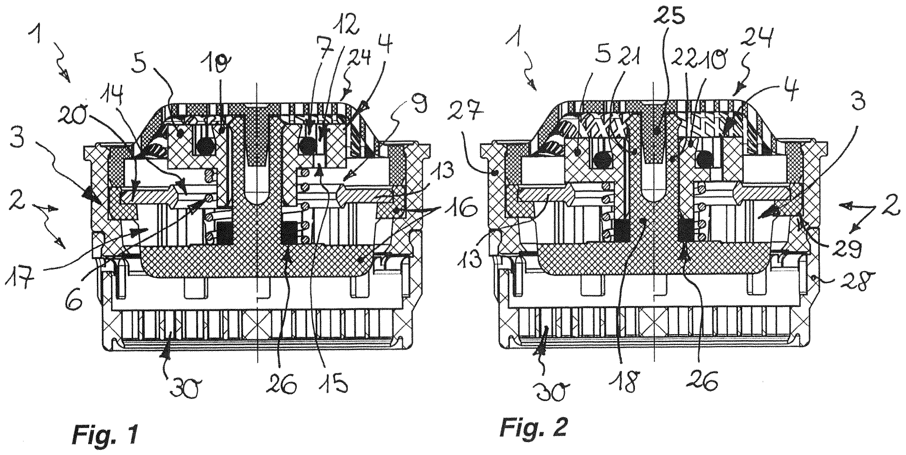

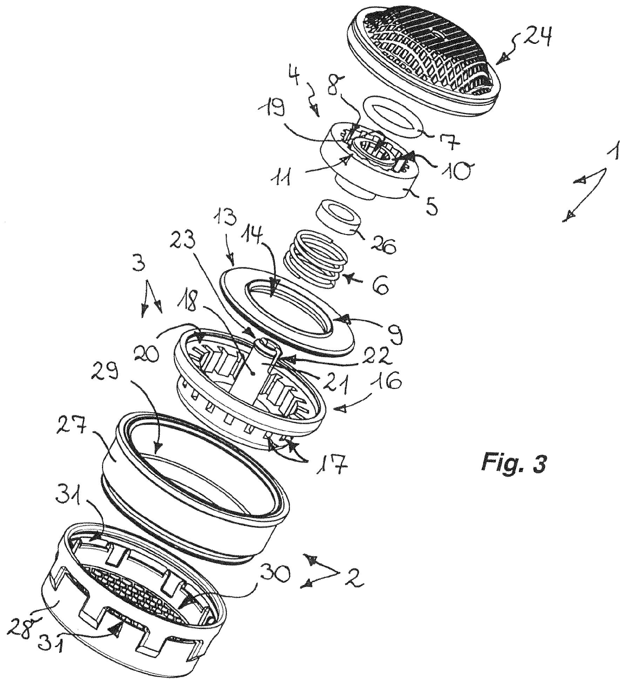

In den Figuren 1 bis 3 ist ein sanitäres Auslaufelement 1 dargestellt, das mit seinem Einsetzgehäuse 2 in den Wasserauslauf einer hier nicht weiter gezeigten sanitären Auslaufarmatur einsetzbar ist. Das Auslaufelement 1 hat einen Strahlregler 3, der das aus dem Auslaufelement 1 ausströmende Wasser zu einem homogenen und möglichst nicht-spritzenden Wasserstrahl zu formen hat. Diesem Strahlregler 3 ist ein Durchflussmengenregler 4 vorgeschaltet, der die pro Zeiteinheit durchströmende Wassermenge auf einen festgelegten Maximalwert einregelt. Dieser Durchflussmengenregler 4 ist mit seinem Reglergehäuse 5 im Einsetzgehäuse 2 des Auslaufelements 1 verschieblich geführt und von einer in Figur 1 gezeigten Offenstellung, in der das Reglergehäuse 5 an seiner Gehäuseaußenseite entlang zumindest von einer Teilmenge des das Auslaufelement 1 durchströmenden Wassers umspült wird, gegen die Rückstellkraft zumindest eines Rückstellelements 6 in die in Figur 2 gezeigte Schließstellung bewegbar.

In der in Figur 2 gezeigten Schließstellung kann das durch das Einsetzgehäuse 2 des Auslaufelements 1 zum Strahlregler 3 strömende Wasser nur noch den Durchflussmengenregler 4 durchströmen. Während also in der Offenstellung gemäß Figur 1 der Wasserdruck noch nicht eine Höhe erreicht hat, bei welcher einerseits die Rückstellkraft des wenigstens einen Rückstellelements 6 überwunden wird und andererseits der Durchflussmengenregler 4 die Durchflussleistung auf den festgelegten Maximalwert runterzuregeln hat, wird bei einem demgegenüber erhöhten Wasserdruck der Durchflussmengenregler 4 in seine Schließstellung bewegt, in der das Wasser nur noch durch den Durchflussmengenregler 4 passieren kann, derart, dass der Durchflussmengenregler 4 die auslaufende Wassermenge funktionsgerecht auf den festgelegten Maximalwert einregeln kann.

Da durch Auswahl eines geeigneten Rückstellelements 6 mit festliegender Rückstellkraft sich auch der Wasserdruck festlegen lässt, zu dem der Durchflussmengenregler 4 in der Schließstellung funktionsgerecht arbeiten soll, ist das erfindungsgemäße Auslaufelement 1 besonders gut und einfach abzustimmen und zeichnet sich durch einen funktionssicheren und stabilen Betrieb aus.

Der im Einsetzgehäuse 2 des Auslaufelements 1 verschieblich geführte Durchflussmengenregler 4 hat einen ringförmiges Drosselkörper 7 aus elastischem Material. Der Drosselkörper 7 ist in einer Ringnut 8 im Reglergehäuse 6 angeordnet und umgreift einen zentralen Gehäusekern 10. Zumindest einer der die Ringnut 8 begrenzenden Umfangswandungen trägt eine Regelprofilierung 11, in die sich der elastische Drosselkörper 7 bei steigendem Wasserdruck zunehmend einformt. Diese Regelprofilierung 11 ist im hier gezeigten Ausführungsbeispiel an der außenliegenden Umfangswandung der Ringnut 8 vorgesehen. Der Drosselkörper 7 begrenzt zwischen sich und der zumindest einen, die Regelprofilierung 11 tragenden Umfangswandung einen Ring- oder Steuerspalt 12. Da der Drosselkörper 7 sich bei steigendem Druck des durch den Ring- oder Steuerspalt 12 strömenden Wassers in die Regelprofilierung 11 einformt, wird der Ringspalt 12 zunehmend verengt und auch bei steigendem Wasserdruck kann die Durchflussleistung einen festgelegten Maximalwert nicht übersteigen.

In Figur 2 ist dargestellt, dass der Durchflussmengenregler 4 mit seinem Reglergehäuse 5 in der in Figur 2 gezeigten Schließstellung derart auf einem Auflager 13 aufliegt, dass eine Auflageröffnung 14 verschlossen wird. Dabei mündet die zumindest eine Durchflussöffnung 15 des Durchflussmengenreglers 4 in der Schließstellung in der Auflageröffnung 14.

Damit der Durchflussmengenregler 4 mit seinem Reglergehäuse 5 in der in Figur 2 gezeigten Schließstellung die Auflageröffnung 14 dicht verschließen kann, ist zwischen dem Reglergehäuse 5 und dem Auflager 13 zumindest eine Ringdichtung 9 vorgesehen. Diese zumindest eine Ringdichtung 9 ist hier an den die Auflageröffnung 14 umlaufenden Randbereich des Auflagers 13 einstückig angeformt.

Damit der Strahlregler 3 das das Auslaufelement 1 durchströmende Wasser in eine Vielzahl von Einzelstrahlen zerteilen kann, weist der Strahlregler 3 einen Strahlzerleger auf. Dieser Strahlzerleger ist hier als etwa topfförmiger Diffusor 16 ausgebildet, der in der Umfangswandung seiner Topfform Zerlegeröffnungen 17 hat. Diese Zerlegeröffnungen 17 sollen das durchströmende Wasser in eine entsprechende Anzahl von Einzelstrahlen aufteilen.

Der Topfboden des topfförmigen Diffusors 16 ist als lochfreie Prallfläche ausgebildet, die das zunächst in Längsrichtung des Reglergehäuses 5 einströmende Wasser radial zur Seite nach außen hin ablenkt und zu den Zerlegeröffnungen 17 führt. An dem Topfboden des topfförmigen Diffusors 16 steht ein Führungszapfen 18 vor, der eine Führungsöffnung 19 im Reglergehäuse 5 durchsetzt. Diese Führungsöffnung 19 durchsetzt den Gehäusekern 10 des Durchflussmengenreglers 4. Der Diffusor 16 hat an seinem zuströmseitigen Innenumfang eine Auflageraufnahme, auf der das Auflager 13 aufliegt. Diese Auflageraufnahme ist hier als Ringabsatz 20 ausgebildet. Das Auflager 13 bildet mit seiner zentralen Auflageröffnung 14 eine Ringscheibe.

Aus einem Vergleich der Figuren 1 bis 3 wird deutlich, dass der Führungszapfen 18 an seinem freien Zapfenende Federarme 21, 22 trägt, an denen außenseitig Schiebeanschläge 23 vorgesehen sind. Diese Schiebeanschläge 23 begrenzen den Schiebeweg des Durchflussmengenreglers 4 in die dem durchströmenden Wasser entgegengesetzte Richtung. Diese Federarme 21, 22 sind aus einer Funktionsstellung gegen ihre Eigenelastizität in eine Lösungsstellung zueinander einlenk- oder einfederbar.

Das Auslaufelement 1 hat ein Vorsatz- oder Filtersieb 24, das ein Eindringen der im Wasser eventuell mitgeführten Schmutzpartikel in das Gehäuseinnere des Einsetzgehäuses 2 verhindert. Dieses Vorsatz- oder Filtersieb 24 ist am Einsetzgehäuse 2 vorzugsweise lösbar befestigbar und insbesondere verrastbar. Zwischen dem zuströmseitigen Vorsatz- oder Filtersieb 24 und dem hier als Diffusor 16 ausgebildeten Strahlzerleger ist der Durchflussmengenregler 4 im Einsetzgehäuse 3 angeordnet und verschieblich geführt.

In den Figuren 1 und 2 ist gut erkennbar, dass am Vorsatz- oder Filtersieb 24 ein Sicherungszapfen 25 vorgesehen ist, der bei am Einsetzgehäuse 3 verrastetem Vorsatz- oder Filtersieb 24 derart in einen zwischen den Federarmen 21, 22 verbleibenden Freiraum vorsteht, dass die Federarme 21, 22 gegen ein Einlenken oder Einfedern zueinander gesichert sind. Auf diese Weise wird verhindert, dass das auf den Durchflussmengenregler 4 einwirkende Rückstellelement 6, das vorzugsweise als Druckfeder und insbesondere als Wendelfeder ausgebildet ist, den Durchflussmengenregler 4 derart gegen das Vorsatz- oder Filtersieb 24 presst, dass sich die lösbare Verbindung zwischen diesem Vorsatz- oder Filtersieb 24 und dem Einsetzgehäuse 2 unbeabsichtigt löst.

In den Figuren 1 und 2 ist auch erkennbar, dass zwischen dem Topfboden des Diffusors 16 und dem Reglergehäuse 5 ein Dämpfungsring 26 vorgesehen ist, dessen Ringöffnung der Führungszapfen 18 durchsetzt, wobei der Dämpfungsring 26 den Schiebeweg des Reglergehäuses 5 in Richtung zum Strahlzerleger 16 begrenzt.

Das Einsetzgehäuse 2 ist hier zweiteilig ausgebildet und weist ein zuströmseitiges Gehäuseteil 27 sowie ein damit lösbar verrastbares abströmseitiges Gehäuseteil 28 auf. Der Diffusor 16 ist von der Zuströmseite des Gehäuseteiles 27 aus darin bis zu einem Ringabsatz 29 eingesetzt.

An der die Auslaufstirnfläche des Auslaufelements 1 bildenden Stirnseite des abströmseitigen Gehäuseteils 28 ist ein Strömungsgleichrichter vorgesehen, der die Einzelstrahlen zu einem homogenen Gesamtstrahl wieder zusammenzufügen hat. Dieser Strömungsgleichrichter weist eine Gitter-, Netz- oder Lochstruktur auf. Bei dem hier gezeigten Ausführungsbeispiel ist der Strömungsgleichrichter als Lochplatte 30 ausgebildet, die eine Vielzahl wabenzellenartiger Durchflusslöcher hat und die einstückig an das abströmseitige Gehäuseteil 28 angeformt ist.

Der Strahlregler 3 des hier gezeigten Auslaufelements 1 ist als sogenannter Strahlbelüfter ausgebildet, bei dem das durchströmende Wasser mit Umgebungsluft durchmischt wird. Den Zerlegeröffnungen 17 des Diffusors 16 folgt in Strömungsrichtung dazu eine Querschnittsverengung, in der die vom Diffusor 16 kommenden Einzelstrahlen eine Geschwindigkeitserhöhung erfahren. Durch diese Geschwindigkeitserhöhung entsteht auf der Abströmseite des Diffusors 16 ein Unterdruck, der Umgebungsluft durch Gehäuseöffnungen 31 ansaugt, die am Gehäuseumfang des Einsetzgehäuses 2 vorgesehen sind.

Statt des Durchflussmengenreglers 4 kann in dem hier dargestellten Auslaufelement 1 auch eine Durchflussdrossel vorgesehen sein, die das pro Zeiteinheit durchströmende Wasser auf einen festgelegten Wert zu begrenzen hat. Eine solche Durchflussdrossel kann wie der hier dargestellte Durchflussmengenregler 4, - jedoch ohne den elastischen Drosselkörper 7, ausgebildet sein.

### Bezugszeichenliste

- 1: sanitäres Auslaufelement
- 2: Einsetzgehäuse
- 3: Strahlregler
- 4: Durchflussmengenregler
- 5: Reglergehäuse
- 6: Rückstellelement
- 7: Drosselkörper
- 8: Ringnut
- 9: Ringdichtung
- 10: Gehäusekern
- 11: Regelprofilierung
- 12: Ring- oder Steuerspalt
- 13: Auflager
- 14: Auflageröffnung
- 15: Durchflussöffnung
- 16: Diffusor
- 17: Zerlegeröffnung
- 18: Führungszapfen
- 19: Führungsöffnung
- 20: Ringabsatz
- 21: Federarm
- 22: Federarm
- 23: Schiebeanschläge
- 24: Vorsatz- oder Filtersieb
- 25: Sicherungszapfen
- 26: Dämpfungsring
- 27: zuströmseitiges Gehäuseteil
- 28: abströmseitiges Gehäuseteil
- 29: Ringabsatz
- 30: Lochplatte
- 31: Belüftungsöffnung

## Patentansprüche

1. Sanitäres Auslaufelement (1), das mit seinem Einsetzgehäuse (2) in den Wasserauslauf einer sanitären Auslaufarmatur einsetzbar ist und einen Strahlregler (3) zum Formen des austretenden Wasserstrahls hat, dem zuströmseitig ein Durchflussmengenregler (4) vorgeschaltet ist, welcher die pro Zeiteinheit durchströmende Wassermenge auf einen festgelegten Wert einregelt oder begrenzt und der (4) ein ringförmiges Drosselelement (7) aus elastischem Material hat, das in einem Reglergehäuse (5) des Durchflussmengenreglers (4) in einer Ringnut (8) angeordnet ist und einen Gehäusekern (10) des Durchflussmegenreglers (4) umgreift, wobei zumindest eine der die Ringnut (8) begrenzenden Umfangswandungen (11) eine Regelprofilierung trägt, wobei das Reglergehäuse (5) im Bereich des Nutgrunds der Ringnut (8) wenigstens eine Durchflussöffnung (15) aufweist, wobei der Drosselkörper (7) zwischen sich und der zumindest einen, die Regelprofilierung (11) tragenden Umfangswandung einen Steuer- oder Ringspalt (12) begrenzt, wobei der Drosselkörper (7) sich bei steigendem Druck des durchströmenden Wassers derart in die Regelprofilierung (11) einformt, dass sich der Ringspalt (12) zunehmend verengt, und wobei der Durchflussmengenregler (4) mit dem Reglergehäuse (5) im Einsetzgehäuse (2) verschieblich geführt ist, **dadurch gekennzeichnet, dass** der Durchflussmengenregler (4) von einer Offenstellung, in der das Reglergehäuse (5) zumindest von einer Teilmenge des Wassers umspült wird, gegen die Rückstellkraft zumindest eines Rückstellelements (6) in eine Schließstellung bewegbar ist, in der das zum Strahlregler (3) strömende Wasser den Durchflussmengenregler (4) durchströmt, und dass der Durchflussmengenregler (4) mit seinem Reglergehäuse (5) in der Schließstellung derart auf einem als Ringscheibe ausgebildeten Auflager (13) aufliegt, dass eine Auflageröffnung (14) des Auflagers (13) verschlossen wird und das durch das Einsetzgehäuse (2) des Auslaufelements (1) zum Strahlregler (3) strömende Wasser nur noch den Durchflussmengenregler (4) durchströmt.

2. Auslaufelement nach Anspruch 1, **dadurch gekennzeichnet, dass** die zumindest eine Durchflussöffnung (15) des Durchflussmengenreglers (4) in der Schließstellung in der Auflageröffnung (14) mündet.

3. Auslaufelement nach Anspruch 1 oder 2, **dadurch gekennzeichnet, dass** zwischen dem Reglergehäuse (5) und dem Auflager (13) zumindest eine Ringdichtung vorgesehen ist.

4. Auslaufelement nach Anspruch 3, **dadurch gekennzeichnet, dass** die zumindest eine Ringdichtung an das Reglergehäuse (5) oder an den die Auflageröffnung (14) umgrenzenden Randbereich des Auflagers (13) einstückig angeformt ist.

5. Auslaufelement nach einem der Ansprüche 1 bis 4, **dadurch gekennzeichnet, dass** der Strahlregler (3) einen Strahlzerleger (16) hat.

6. Auslaufelement nach Anspruch 5, **dadurch gekennzeichnet, dass** der Strahlzerleger als topfförmiger Diffusor (16) ausgebildet ist, der in der Umfangswandung seiner Topfform Zerlegeröffnungen (17) hat zum Zerlegen des durchströmenden Wassers in eine Vielzahl von Einzelstrahlen.

7. Auslaufelement nach Anspruch 6, **dadurch gekennzeichnet, dass** an dem Topfboden des topfförmigen Diffusors (16) ein Führungszapfen (18) vorsteht, der eine Führungsöffnung (19) im Reglergehäuse (5) durchsetzt.

8. Auslaufelement nach Anspruch 7, **dadurch gekennzeichnet, dass** die Führungsöffnung (19) den Gehäusekern (10) des Reglergehäuses (5) durchsetzt.

9. Auslaufelement nach einem der Ansprüche 6 bis 8, **dadurch gekennzeichnet, dass** der Diffusor (16) an seinem zuströmseitigen Innenumfang eine Auflageraufnahme hat, auf der das Auflager (13) aufliegt und dass die Auflageraufnahme vorzugsweise als Ringabsatz (20) ausgebildet ist.

10. Auslaufelement nach einem der Ansprüche 7 bis 9, **dadurch gekennzeichnet, dass** der Führungszapfen (18) an seinem freien Zapfenende Federarme (21, 22) trägt, dass an den Federarmen (21, 22) außenseitig Schiebeanschläge (23) für das Reglergehäuse (5) vorgesehen sind und dass die Federarme (21, 22) aus einer Funktionsstellung gegen ihre Eigenelastizität in eine Lösestellung zueinander einlenk- oder einfederbar sind.

11. Auslaufelement nach einem der Ansprüche 5 bis 10, **dadurch gekennzeichnet, dass** das Auslaufelement (1) ein Vorsatz- oder Filtersieb (24) hat, dass das Vorsatz- oder Filtersieb (24) am Einsetzgehäuse (2) vorzugsweise lösbar befestigbar ist, und dass der Durchflussmengenregler (4) im Einsetzgehäuse (2) zwischen dem Strahlzerleger (16) und dem Vorsatz- oder Filtersieb (24) angeordnet und verschieblich geführt ist.

12. Auslaufelement nach Anspruch 11, **dadurch gekennzeichnet, dass** am Vorsatz- oder Filtersieb (24) ein Sicherungszapfen (25) vorgesehen ist, der bei am Einsetzgehäuse (2) verrastetem Vorsatz- oder Filtersieb (24) derart in einen zwischen den Federarmen (21, 22) verbleibenden Freiraum vorsteht, dass die Federarme (21, 22) in ihrer Funktionsstellung gesichert sind.

13. Auslaufelement nach einem der Ansprüche 1 bis 12, **dadurch gekennzeichnet, dass** das zumindest eine Rückstellelement (6) eine Rückstell- oder Druckfeder ist.

14. Auslaufelement nach einem der Ansprüche 6 bis 13, **dadurch gekennzeichnet, dass** zwischen dem Topfboden des Diffusors (16) und dem Reglergehäuse (5) ein Dämpfungsring (26) vorgesehen ist, dessen Ringöffnung den Führungszapfen (18) durchsetzt und dass der Dämpfungsring (26) den Schiebeweg des Reglergehäuses (5) in Richtung zum Strahlzerleger (16) begrenzt.

## Claims

1. Sanitary outlet element (1) which can be inserted, by way of its insert housing (2), into the water outlet of a sanitary outlet fitting and has a jet regulator (3) for shaping the exiting water jet, there being arranged in front of the jet regulator, as seen on the inflow side, a throughflow-quantity regulator (4), by means of which the quantity of water flowing through per unit of time is adjusted, or limited, to a set value and which (4) has an annular flow-restricting element (7) which is made of elastic material, is arranged in a regulator housing (5) of the through low-quantity regulator (4) in an annular groove (8) and engages around a housing core (10) of the through-flow quantity regulator (4), wherein at least one of the circumferential walls (11) delimiting the annular groove (8) bears a regulating profiling, wherein the regulator housing (5), in the region of the floor of the annular grove (8), has at least one throughflow opening (15), wherein the flow-restricting body(7) delimits, between itself and the at least one circumferential wall bearing the regulating profiling (11), a control or annular gap (12), wherein the flow-restricting body (7), as the pressure of the water flowing through increases, embeds itself into the regulating profiling (11) such that the annular gap (12) narrows to an increasing extent, and wherein the throughflow-quantity regulator (4) along with the regulator housing (5) is guided in a displaceable manner in the insert housing (2), **characterized in that** the throughflow-quantity regulator (4) can be moved, counter to the restoring force of at least one restoring element (6), from an open position, in which the regulator housing (5) has at least some of the water flowing around it, into a closed position, in which the water flowing to the jet regulator (3) flows through the throughflow-quantity regulator (4), and **in that**, in the closed position, the throughflow-quantity regulator (4) rests, by way of its regulator housing (5), on a bearing means (13), which is designed in the form of an annular disc, such that an opening (14) of the bearing means (13) is closed and the water flowing through the insert housing (2) of the outlet element (1) to the jet regulator (3) still flows only through the throughflow-quantity regulator (4).

2. Outlet element according to Claim 1, **characterized in that**, in the closed position, the at least one throughflow opening (15) of the throughflow-quantity regulator (4) opens out in the bearing-means opening (14).

3. Outlet element according to Claim 1 or 2, **characterized in that** at least one annular seal is provided between the regulator housing (5) and the bearing means (13).

4. Outlet element according to Claim 3, **characterized in that** the at least one annular seal is integrally formed on the regulator housing (5) or on that peripheral region of the bearing means (13) which surrounds the bearing-means opening (14).

5. Outlet element according to one of Claims 1 to 4, **characterized in that** the jet regulator (3) has a jet divider (16).

6. Outlet element according to Claim 5, **characterized in that** the jet divider is designed in the form of a cup-like diffuser (16) which, in the circumferential wall of its cup shape, has divider openings (17), by means of which the water flowing through is divided into a multiplicity of individual jets.

7. Outlet element according to Claim 6, **characterized in that** a guide pin (18) projects on the cup base of the cup-like diffuser (16) and passes through a guide opening (19) in the regulator housing (5).

8. Outlet element according to Claim 7, **characterized in that** the guide opening (19) passes through the core (10) of the regulator housing (5).

9. Outlet element according to one of Claims 6 to 8, **characterized in that** the diffuser (16), on its inflow-side inner circumference, has a bearing-means mount, on which the bearing means (13) rests, and **in that** the bearing-means mount is preferably designed in the form of an annular shoulder (20).

10. Outlet element according to one of Claims 7 to 9, **characterized in that** the guide pin (18), at its free end, bears resilient arms (21, 22), **in that** sliding stops (23) for the regulator housing (5) are provided on the outside of the resilient arms (21, 22), and **in that** the resilient arms (21, 22) can be deflected, or moved resiliently, inwards in relation to one another, counter to their inherent elasticity, from a functional position into a release position.

11. Outlet element according to one of Claims 5 to 10, **characterized in that** the outlet element (1) has an attachment screen or filter screen (24), **in that** the attachment screen or filter screen (24) can be fastened preferably in a releasable manner on the insert housing (2), and **in that** the throughflow-quantity regulator (4) is arranged, and guided in a displaceable manner, in the insert housing (2) between the jet divider (16) and the attachment screen or filter screen (24).

12. Outlet element according to Claim 11, **characterized in that** the attachment screen or filter screen (24) has provided on it a securing pin (25) which, with the attachment screen or filter screen (24) latched on the insert housing (2), projects into a free space remaining between the resilient arms (21, 22) such that the resilient arms (21, 22) are secured in their functional position.

13. Outlet element according to one of Claims 1 to 12, **characterized in that** the at least one restoring element (6) is a restoring spring or compression spring.

14. Outlet element according to one of Claims 6 to 13, **characterized in that** the cup base of the diffuser (16) and the regulator housing (5) have provided between them a damping ring (26), the guide pin (18) passing through the annular opening of said damping ring, and **in that** the damping ring (26) delimits the sliding path of the regulator housing (5) in the direction of the jet divider (16).

## Revendications

1. Élément de sortie sanitaire (1), qui peut être inséré avec son boîtier d'insertion (2) dans l'écoulement d'eau d'une robinetterie d'écoulement sanitaire et comporte un aérateur (3) pour former le jet d'eau sortant auquel est monté en amont côté afflux un régulateur de débit (4), lequel règle ou limite la quantité d'eau à s'écouler par unité de temps sur une valeur fixée et lequel (4) comporte un élément d'étranglement annulaire (7) en matériau élastique qui est disposé dans une rainure annulaire (8) dans un boîtier de régulateur (5) du régulateur de débit (4) et entoure un cœur de boîtier (10) du régulateur de débit (4), dans lequel au moins l'une des parois périphériques (11) délimitant la rainure annulaire (8) porte un profilage de régulation, dans lequel le boîtier de régulateur (5) présente au niveau de la base de rainure au moins une ouverture d'écoulement (15), dans lequel le corps d'étranglement (7) délimite une fente de commande ou fente annulaire (12) entre lui et l'au moins une paroi périphérique portant le profilage de régulation (11), dans lequel le corps d'étranglement (7) se déploie dans le profilage de régulation (11) lors de l'accroissement de la pression de l'eau qui s'écoule de telle sorte que la fente annulaire (12) rétrécit de plus en plus, et dans lequel le régulateur de débit (4) est guidé de manière mobile avec le boîtier de régulateur (5) dans le boîtier d'insertion (2), **caractérisé en ce que** le régulateur de débit (4) peut, dans une position ouverte où le boîtier de régulateur (5) est entouré au moins d'une quantité partielle d'eau, être déplacé contre la force de rappel d'au moins un élément de rappel (6) dans une position de fermeture où l'eau s'écoulant vers l'aérateur (3) traverse le régulateur de débit (4) et **en ce que** le régulateur de débit (4) repose avec son boîtier de régulateur (5) dans la position de fermeture sur un support configuré sous la forme d'un disque annulaire (13) de telle sorte qu'une ouverture de support (14) du support (13) est fermée et l'eau s'écoulant vers l'aérateur (3) à travers le boîtier d'insertion (2) de l'élément de sortie (1) ne traverse plus que le régulateur de débit (4).

2. Élément de sortie selon la revendication 1, **caractérisé en ce que** l'au moins une ouverture d'écoulement (15) du régulateur de débit (4) débouche dans la position de fermeture dans l'ouverture de support (14).

3. Élément de sortie selon la revendication 1 ou 2, **caractérisé en ce qu'**entre le boîtier de régulateur (5) et le support (13), il est prévu au moins un joint d'étanchéité annulaire.

4. Élément de sortie selon la revendication 3, **caractérisé en ce que** l'au moins un joint d'étanchéité annulaire est formé d'un seul tenant sur le boîtier de régulateur (5) ou sur la zone du bord définissant l'ouverture de support (14) du support (13).

5. Élément de sortie selon l'une des revendications 1 à 4, **caractérisé en ce que** l'aérateur (3) comporte un brise-jet (16).

6. Élément de sortie selon la revendication 5, **caractérisé en ce que** le brise-jet est configuré sous la forme d'un diffuseur en forme de pot (16) qui comporte, dans la paroi périphérique de sa forme de pot des ouvertures de brise-jet (17) pour briser l'eau qui s'écoule en une pluralité de jets individuels.

7. Élément de sortie selon la revendication 6, **caractérisé en ce qu'**au niveau du fond du pot du diffuseur en forme de pot (16), un tenon de guidage (18) fait saillie et pénètre dans une ouverture de guidage (19) dans le boîtier de régulateur (5).

8. Élément de sortie selon la revendication 7, **caractérisé en ce que** l'ouverture de guidage (19) pénètre dans le cœur de boîtier (10) du boîtier de régulateur (5).

9. Élément de sortie selon l'une des revendications 6 à 8, **caractérisé en ce que** le diffuseur (16) comporte sur sa périphérie intérieure côté afflux un logement de support sur lequel repose le support (13) et **en ce que** le logement de support est de préférence configuré sous la forme d'un épaulement annulaire (20).

10. Élément de sortie selon l'une des revendications 7 à 9, **caractérisé en ce que** le tenon de guidage (18) porte son extrémité libre de tenon des bras de ressort (21, 22), **en ce qu'**au niveau des bras de ressort (21, 22) côté extérieur sont prévues des butées de coulisseau (23) pour le boîtier de régulateur (5) et **en ce que** les bras de ressort (21, 22) peuvent être poussés ou guidés l'un par rapport à l'autre contre leur propre élasticité d'une position de fonctionnement dans une position de relâchement.

11. Élément de sortie selon l'une des revendications 5 à 10, **caractérisé en ce que** l'élément de sortie (1) comporte un pré-tamis ou tamis de filtre (24), **en ce que** le pré-tamis ou tamis de filtre (24) peut être fixé au boîtier d'insertion (2) de préférence de manière amovible et **en ce que** le régulateur de débit (4) est disposé dans le boîtier d'insertion (2) entre le brise-jet (16) et le pré-tamis ou tamis de filtre (24) et y est guidé de manière mobile.

12. Élément de sortie selon la revendication 11, **caractérisé en ce qu'**au niveau du pré-tamis ou tamis de filtre (24), il est prévu un tenon de sécurité (25) qui fait saillie dans un espace resté libre entre les bras de ressort (21, 22), lorsque le pré-tamis ou tamis de filtre (24) se trouve sur le boîtier d'insertion (2), de telle sorte que les bras de ressort (21, 22) sont sécurisés dans leur position de fonctionnement.

13. Élément de sortie selon l'une des revendications 1 à 12, **caractérisé en ce que** l'au moins un élément de rappel (6) est un ressort de rappel ou de pression.

14. Élément de sortie selon l'une des revendications 6 à 13, **caractérisé en ce qu'**entre le fond du pot du diffuseur (16) et le boîtier de régulateur (5), il est prévu un anneau d'amortissement (26) dont l'ouverture annulaire pénètre dans le tenon de guidage (18) et **en ce que** l'anneau d'amortissement (26) délimite le trajet de poussée du boîtier de régulateur (5) dans la direction du brise-jet (16).
